# EUROPEAN PATENT APPLICATION

(11) **EP 4 699 826 A1**
(43) Date of publication of application: **25.02.2026**
(21) Application number: 25193720.7
(22) Date of filing: 04.08.2025
(51) Int. Cl.: B60D 1/04, A01B 59/06, B60D 1/14, B60D 1/28

(54) **COUPLING HOOK FOR A TRACTOR HITCH DEVICE, ARM OF A TRACTOR HITCH DEVICE AND METHOD FOR A COUPLING HOOK FOR A TRACTOR HITCH DEVICE**

(30) Priority: 19.08.2024 FI 20246029
(71) Applicant: LH Lift Oy, 41370 Kuusa (FI)
(72) Inventor: VIIKKI, Timo, 41370 KUUSA (FI)
(74) Representative: Kespat Oy

(57) **Abstract**

The invention relates to a coupling hook (10) for a tractor hitch device, the coupling hook (10) including a coupling socket (27), a housing (25) and a catch (2), wherein the coupling hook (10) is configured to join a coupling ball (11) of an implement or analogous piece of equipment to its coupling socket (27) and to close the coupling socket (27) with the catch (2), which extends from the housing (25) into the coupling socket (27). The coupling hook (10) includes an actuator (40) that is configured to press the coupling ball (11) against a counterface (50) of the coupling socket (27), thus eliminating any play (44) between the coupling ball (11) and the coupling hook (10). The invention also relates to an arm of a tractor hitch device and to a method for a coupling hook (10) for a tractor hitch device.

## Description

The invention relates to a coupling hook for a tractor hitch device, the coupling hook including a coupling socket, a housing and a catch, wherein the coupling hook is configured to join a coupling ball of an implement or analogous piece of equipment to its coupling socket and to close the coupling socket with the catch, which extends from the housing into the coupling socket. The invention also relates to an arm of a tractor hitch device and to a method for a coupling hook for a tractor hitch device.

Hitch devices are used in tractors to attach various implements to a tractor. A common hitch device is a three-point hitch device which can be arranged on the rear of the tractor and which includes two towing arms and one pushing arm, which are generally operated hydraulically. The pushing arm is arranged above the towing arms and at a central point between the latter in a horizontal direction. The function of the pushing arm is to control the angle of inclination of a connected implement in the direction of the tractor. The towing arms adjust the height of the connected implement. Lateral stabilizers, which limit a lateral movement of the implement, are also employed between the towing arms and the tractor. By means of an adjustable lifting rod of the towing arm, it is possible to adjust a height difference between the respective towing arms and thus an angle of transverse inclination of the connected implement. Attached to each towing arm is a coupling hook or connecting hook, which attaches the coupling ball of the implement or analogous piece of equipment to its coupling socket so as to attach the implement or analogous piece of equipment to the hitch device and thus to the tractor.

It is also possible to use a two-point hitch device to attach implements to a tractor, the two-point hitch device lacking the pushing arm of the three-point hitch device. The towing arms forming the two points regulate the height of the implement and limit its lateral freedom.

In the coupling hooks according to the prior art, there is play between the coupling ball and the coupling hook due to the structure of the coupling hook. In certain situations, this play can be problematic and can impede the control of the implement. As a result of this play, the tractor can also be subjected to shocks from the implement.

The patent publication FI 120295 B, which discloses a coupling hook for a three-point tractor attachment, is known from the prior art. The coupling hook in question includes said play between the coupling ball and the coupling hook.

The object of the invention is to provide an improved coupling hook, an improved arm of a tractor hitch device, and an improved method for a coupling hook for a tractor hitch device, which can eliminate the play between a coupling ball and the coupling hook. The characteristic features of a coupling hook according to the invention are set out in the attached patent claim 1, the characteristic features of an arm of a tractor hitch device according to the invention are set out in the attached patent claim 13, and the characteristic features of a method according to the invention are set out in the attached patent claim 15.

The coupling hook for a tractor hitch device according to the invention includes a coupling socket, a housing and a catch, wherein the coupling hook is configured to join a coupling ball of an implement or analogous piece of equipment to its coupling socket and to close the coupling socket with the catch, which extends from the housing into the coupling socket. The coupling hook includes an actuator that is configured to press the coupling ball against a counterface of the coupling socket, thus eliminating any play between the coupling ball and the coupling hook.

Play between the coupling hook and the coupling ball can thus be eliminated with the actuator. When the coupling socket is in the closed position, the coupling ball can be pressed against the counterface of the coupling socket by the actuator. This feature is advantageous for a user when the connection of an implement requires less play. This feature also reduces shocks of the implement into the tractor. The counterface refers here to the surface of the coupling hook that is configured to be in contact with the coupling ball.

Preferably, the actuator is configured to lock the coupling ball in the coupling socket, thus preventing an opening of the coupling hook. In addition to eliminating play, the actuator can also be used to simultaneously prevent an opening of the coupling hook. Locking here means that when the actuator is in a locked position, the catch does not open or the opening of the catch does not lead to a disengagement of the coupling ball from the coupling housing. In other words, when the actuator presses the coupling ball against the counterface of the coupling socket, an unintended opening of the coupling hook is prevented and the coupling ball is locked in place in the coupling socket. This locking feature is particularly advantageous in work situations in which an unconditional locking of the coupling ball in the coupling socket is desired, such as, for example, when the coupling hook is used to connect an elevating work platform to a tractor. Eliminating play thus also provides stability, so that the implement, such as an elevating work platform, sways less, and simultaneously provides the locking feature for locking the coupling ball, which improves work safety. To achieve the locking feature, the actuator can be configured to prevent a movement of the catch or can be configured in some other manner to prevent the removal of the coupling ball from the coupling socket.

Preferably, the actuator is configured to be movable in such a manner that a path of movement of the actuator is oriented towards the counterface of the coupling socket. In other words, the distance between the actuator and the counterface of the coupling socket is adjustable. Play between the coupling ball and the coupling hook can thus be actively adjusted to a selected value.

Preferably, the actuator is a self-locking adjustment actuator. In other words, the actuator is configured to remain statically in the position in which it is set by a user. Play can thus be set with precision to a value selected by the user, and the play remains statically invariable during operation.

Preferably, the actuator is a manually adjustable adjustment actuator. In other words, the distance of the actuator from the counterface of the coupling hook can be actively adjusted by the user to a selected magnitude. The play can thus be set with precision to a value selected by the user.

Preferably, the actuator is configured to press the catch against the coupling ball in such a manner that the catch presses the coupling ball against the counterface of the coupling socket. The faces of the catch can thus be utilized to decrease play, wherein these faces can press the coupling ball against the counterface of the coupling socket so as to eliminate play entirely.

Preferably, the actuator is configured to press the catch by its upper face towards the coupling socket. This allows a torque to be produced on the catch and thereby on the coupling ball, which holds the coupling ball firmly against the counterface of the coupling socket, thus eliminating play.

Preferably, the actuator is configured to push a locking face of the catch against the coupling ball. This allows a torque to be produced on the catch and thereby on the coupling ball, which holds the coupling ball firmly against the counterface of the coupling socket, thus eliminating play.

Alternatively, the actuator can be configured to be a component entirely separate from the catch, in such a manner that the actuator is configured to be in contact with the coupling ball.

Preferably, the actuator includes a screw arranged in a threaded hole, which is arranged in the frame of the coupling hook. The actuator can thus be implemented in a mechanically simple, reliable, and cost-effective manner. The coupling ball is thus attached to the coupling hook and the coupling socket is closed with the catch, after which the screw is tightened so that play is eliminated through the pressing of the coupling ball against the counterface of the coupling socket by the catch. The screw must be loosened and play restored in order to open the coupling hook when uncoupling the implement. The screw can also be adjusted in such a manner that play is not reduced, in which case it is possible to maintain a conventional operation of the coupling hook, i.e. a play can be maintained, so that the presence of the actuator does not interfere with a use of the coupling hook in any situation.

The screw is preferably a set screw. The screw can thus be embedded in the frame of the coupling hook.

Preferably, a locking screw is arranged in the threaded hole to lock the set screw in place. It is thereby possible to prevent a loosening of the set screw during use of the coupling hook. The locking screw can also be a set screw, in which case the locking screw can also be embedded in the frame of the coupling hook.

As an alternative to set screws, the screw can also be a conventional headed screw, the head of which is arranged on the outside of the coupling hook. In this case, a nut can be used to lock the screw, the nut being arranged on the thread of the screw between the head of the screw and the frame of the coupling hook. The screw can thus be tightened to eliminate play, after which the nut is tightened against the frame of the coupling hook to hold the screw in place.

In one embodiment, the coupling hook includes a spring configured to pull the catch towards the closed position and an operating lever with a handle that extends outside the housing. The coupling hook can thus be configured to shut the coupling ball in the coupling socket automatically with the spring-loaded catch, and the closure can be configured to be manually openable by means of the operating lever, which is connected to the catch in an articulated manner, and the handle. The actuator is a component of the coupling hook distinct from the spring.

In one embodiment, the catch can be pushed into the housing when the coupling ball presses with an opening force against an opening face of the catch that protrudes from an opening in the housing, but is prevented from opening in the locked condition through the action of the tangential force of the coupling ball in the coupling socket. The coupling hook can thus be what is known as a quick coupling hook, in which the coupling ball can be arranged and locked in the coupling socket automatically through the pressing of the coupling ball into the coupling socket.

In one embodiment, the catch is configured to be opened manually with the operating lever, and the catch and the operating lever that is attached in an articulated manner to the catch act in relation to the coupling hook by means of their functional surfaces, which are, in the locked position, the locking face on the side of the coupling hook that lies against the coupling ball, the upper supporting face of the opening and the upper face of the catch that slides against it, the supporting face in the upper part of the operating lever on the side of the catch and the corresponding counterface of the upper opening; and the supporting face in the upper part of the operating lever on the opposite side to the catch and the corresponding counterface of the upper opening, wherein the supporting faces of the catch and the operating lever, together with the counterfaces of the housing, are configured to form a force that locks the catch in order to neutralize the opening force produced by the coupling ball. The locking of the coupling ball can thus be implemented mechanically by means of the design of the housing and the catch.

In one embodiment, the operating lever is associated with locking surfaces that prevent its rotation, and the supporting face of the operating lever on the opposite side to the catch and the supporting face of the operating lever on the side of the catch are elongated, thus allowing the operating lever to open slightly in the direction of opening, thus neutralizing the forces of the coupling ball. It is thus possible to implement an easy release of the coupling ball from the coupling socket.

An arm of a tractor hitch device according to the invention includes a coupling hook as described in the foregoing. It is thereby possible to eliminate play of the arm between the coupling hook and the coupling ball.

Preferably, the arm is a towing arm. A towing arm is especially subjected to significant forces and shocks from the implement during operation, so that it is desirable to reduce or eliminate play of the towing arm.

In a method according to the invention for a coupling hook for a tractor hitch device, a coupling ball of an implement or analogous piece of equipment is placed in a coupling socket of the coupling hook, and the coupling socket is closed with a catch. After the coupling socket has been closed, the coupling ball is pressed against a counterface of the coupling socket by means of an actuator, which eliminates play between the coupling ball and the coupling hook. It is thereby possible to eliminate play between the coupling hook and the coupling ball, which reduces shocks of the implement into the tractor and reduces a swaying of an implement attached to the coupling hook.

Preferably, the coupling ball is locked in the coupling socket by the actuator. This prevents an unintentional uncoupling of the coupling ball from the coupling socket and/or an unintentional opening of the catch.

The invention is described in detail in the following with reference to the attached drawings illustrating embodiments of the invention, wherein
- Figure 1: shows a three-point tractor hitch device including a coupling hook according to the invention,
- Figure 2: shows a partial cross section of a coupling hook according to the invention in a side view,
- Figure 3: shows a coupling hook according to the invention in a top view.

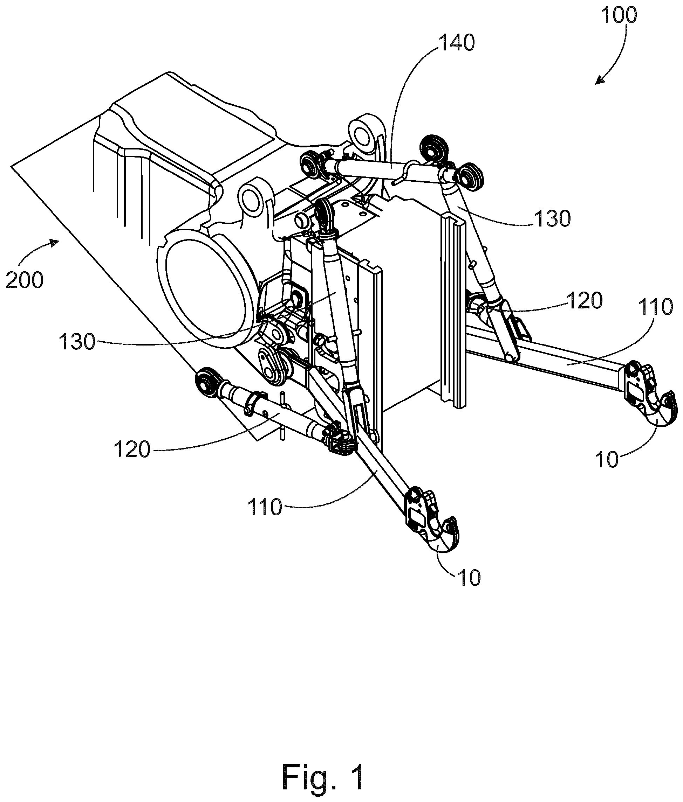

Figure 1 shows a three-point hitch device 100 arranged on a rear part 200 of a tractor and including two coupling hooks 10 according to the invention attached to towing arms 110. The three-point hitch device 100 shown in Figure 1 includes towing arms 110, lateral stabilizers 120, lifting rods 130, and a pushing arm 140.

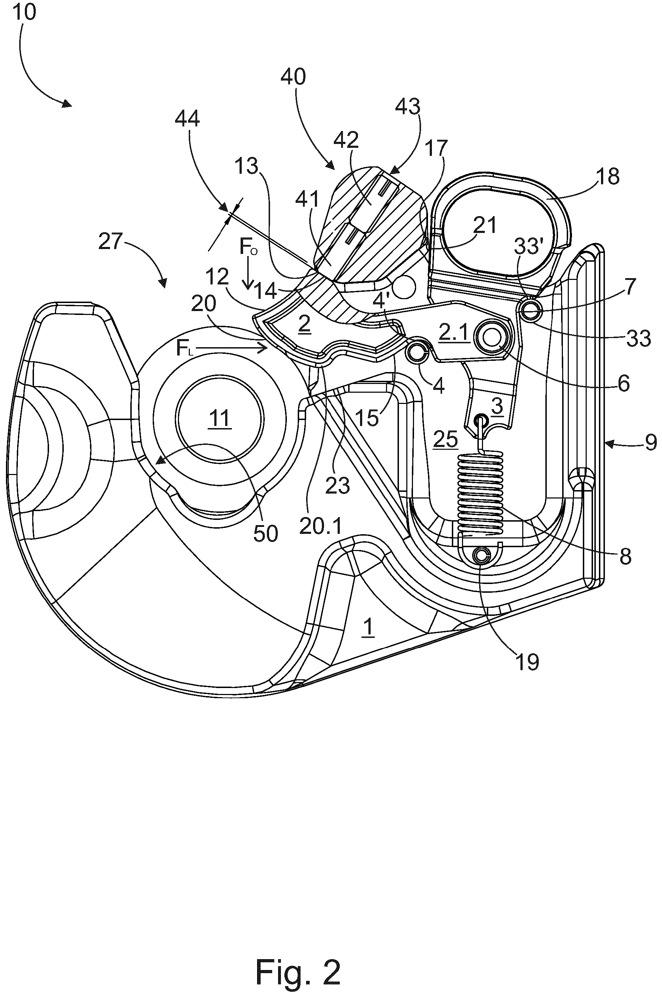

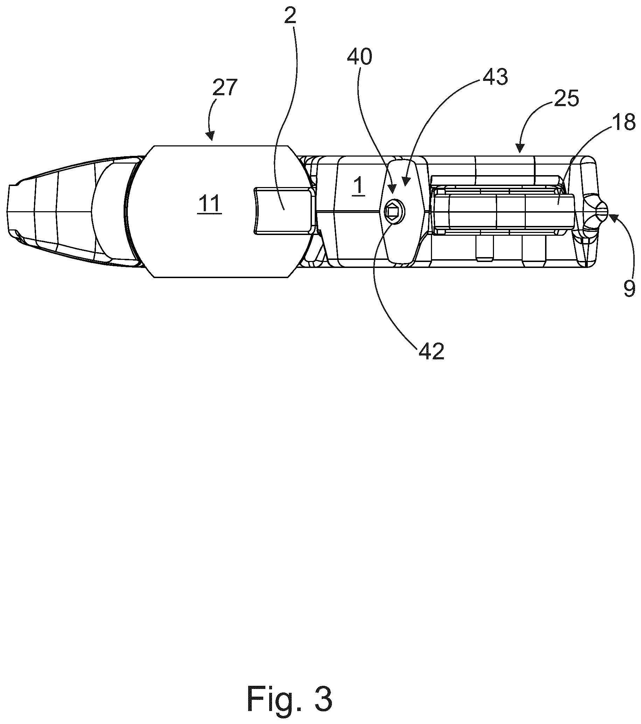

Figures 2 and 3 show a coupling hook 10 according to the invention in more detail. Figure 2 shows a partial cross section of the coupling hook 10 in a side view and with the outer shell removed so that the adjustment parts inside the coupling hook 10 are visible. Figure 3 shows the coupling hook 10 in a top view.

The coupling hook 10 is typically attached by the face 9 to the towing arm 110 by welding. The coupling hook 10 typically includes a frame 1 manufactured in the form of a forged piece, although the frame 1 can also be manufactured by welding. The frame 1 includes a coupling socket 27 and a housing 25. The coupling socket 27 is a conventional coupling socket here and is configured to receive a coupling ball 11. Normally, the coupling ball 11 is permanently mounted on the implement to be coupled or it is mounted on a pin of a standard three-point attachment. In principle, it is possible to achieve a quick coupling without a coupling ball, but this is not recommended. In addition, the coupling ball 11 eliminates possible small differences in angle between the pin and the towing arm.

The closing mechanism of the coupling hook 10 includes a catch 2, an operating lever 3, which is attached in an articulated manner to the catch 2 and which is connected to a handle 18, and a spring 8, wherein one end of the spring 8 is attached to a pin 19 in a lower part of the housing 25 and the other end is attached to the lower end of the operating lever 3 in such a manner that it pulls the catch 2 into the closed position. The coupling hook 11 is opened by pulling the operating lever 3 by the handle 18 out of the housing 25. The coupling hook 10 also includes a quick coupling feature, wherein the coupling ball 11 can be placed in the coupling socket 27 without the handle 18 being touched. The catch 2 extends from the housing 25 into the coupling socket 27 and can be pushed into the housing 25 when the coupling ball 11 presses with an opening force F_{O} against an opening face 12 of the catch 2 that protrudes from the opening in the housing. In a closed condition, however, the catch 2 is prevented from opening through the action of the tangential force F_{L} of the coupling ball 11 in the coupling socket 27. An unintentional opening of the coupling socket 27 is, however, possible by means of a force exerted on the handle 18.

The catch 2 includes articulated lugs 2.1 to which an articulation pin 6 is attached. The catch 2 is supported on all sides at least partially on the frame 1 of the coupling hook 10 as well as, via the articulation pin 6, on the operating lever 3. The catch 2 is pushed out of the housing 25 through the opening between the edge surfaces 13 and 23 of the coupling socket 27. The actual direct load is borne by the edge surface 13 when the coupling ball 11 presses against the locking face 20 of the catch 2, which is transmitted via the upper face 14 to the edge surface 13.

In the closed position, the catch 2 is supported by its lower face 15 on a counterface 4' of a pin 4. In addition to the face pairs mentioned in the foregoing, the movement of the catch 2 is limited by guiding faces of the operating lever 3, which are the counterface 21 opposite the supporting face 17 on the side of the catch 2 in the vicinity of the upper opening and, on the opposite side, slightly lower down, the counterface 33', opposite the supporting face 7, on the pin 33 of the housing. The counterface 21 is higher here than the counterface 33' and is also higher than the articulation pin 6, so that the operating lever 3 cannot rotate and the opening forces F_{L} parallel to the catch 2 are mainly exerted against the counterface 33' of the pin 33. As the supporting face 7 continues to extend in the same, significantly downward direction, these closing statics are maintained until the articulation pin 6 is raised to the height of the pin 33 in connection with the opening of the coupling socket 27. This is as much as 30%, generally at least 10%, of the required opening movement of the operating lever 3.

The coupling hook 10 here includes an automatic opening function, wherein the coupling ball 11 presses against the opening face 12, whereby the catch 2 initially rotates around the pin 4 until the lower face 20.1 of the catch 2 meets the lower edge surface 23 of the opening, where a new centre of rotation is formed and the operating lever 3 is raised through the rotation and sliding of the catch 2.

A slight rotation of the catch 2 also occurs in a normal opening when it is raised by the operating lever 3. The catch 2 initially rotates around a point on the upper face 14, sliding only a very small distance. To this end, the areas near the locking face 20 form a curved profile that can skirt around the coupling ball 11 if it is in the coupling socket 27. The catch 2 then slides along the edge surfaces 13 and 23 while the operating lever 3 slides out of the opening between the counterfaces 21 and 33'.

The coupling socket 27, the housing 25, the catch 2 and the adjustment parts of the coupling hook 10 described in the foregoing, as well as their functionality, are in themselves in accordance with the prior art and correspond to the structure and functionality disclosed in patent publication FI 120295 B.

In a solution according to the prior art, there is play 44 between the coupling ball 11 and the coupling hook 10.

In addition to the features described above, the coupling hook 10 according to the invention includes an actuator 40 by means of which play 44 is eliminated. The actuator 40 is configured to press the coupling ball 11 against a counterface 50 of the coupling socket 27, thus eliminating the play 44 between the coupling ball 11 and the coupling hook 10. It should be noted that, in addition to the coupling hook 10 shown here, the actuator 40 according to the invention can be arranged on any coupling hook according to the prior art.

The frame 1 of the coupling hook 11 here includes a threaded hole 43, the first opening of which is on the outside of the frame 1 and the second opening of which is at the edge surface 13 in such a manner that the second opening points towards the coupling socket 27. A screw, in this case a set screw 41 with a hexagonal recess in one end, is arranged in the threaded hole 43 and presses the catch 2 by its upper face 14 towards the coupling socket 27. The path of movement of the set screw 41 is directed towards the counterface 50 of the coupling socket 27. The set screw 41 pushes the locking face 20 of the catch 2 against the coupling ball 11. Thus, by tightening the set screw 41, the play 44 between the coupling hook 10 and the coupling ball 11 is reduced to zero through the pressing of the coupling ball 11 against the counterface 50 of the coupling socket 27 by means of the catch 2. More specifically, in the situation shown in Figure 2, the set screw 41 is tightened and the play 44 between the coupling hook 10 and the coupling ball 11 is eliminated.

A locking screw 42 is also arranged in the threaded hole 43, wherein the locking screw 42 is also a set screw with a hexagonal recess in one end here, although it is also possible to use a headed screw. The outer set screw, i.e. the locking screw 42, locks the lower set screw 41 in place after the adjustment of the play 44.

The set screws 41, 42 are releasable and the play 44 is thus restorable in such a manner that the coupling hook 11 can be opened when the implement is uncoupled. When the set screw 41 is adjusted in such a manner that play 44 is not reduced, the operation of the coupling hook 10 is conventional and the presence of the set screws 41, 42 does not interfere with the use of the coupling hook 10.

In addition to eliminating play, the set screw 41 locks the coupling ball 11 in the coupling socket 27, thus preventing an opening of the coupling hook 10. In the situation shown in Figure 2, the set screw 41 has been tightened, which prevents the catch 2 from moving. In contrast to the case without a set screw 41, it is thus not possible to open the coupling socket 27 by pulling the handle 18.

The set screw 41 is a self-locking adjustment actuator that remains statically in the selected position in which it has been arranged by the user.

Alternatively, instead of the set screws 41, 42, the actuator 40 can include, for example, a headed screw and a nut that locks the screw in place.

Alternatively, the actuator 40 can be arranged in direct contact with the coupling ball 11. In this case, for example, the screw can be arranged next to the catch 2.

In a method according to the invention for a coupling hook 10 for a tractor hitch device, a coupling ball 11 of an implement or analogous piece of equipment is placed in a coupling socket 27 of the coupling hook 10, and the coupling socket 27 is closed with a catch 2. In the two-step method, after the coupling socket 27 has been closed, the coupling ball 11 is pressed against a counterface 50 of the coupling socket 27 by means of an actuator 40, which eliminates play 44 between the coupling ball 11 and the coupling hook 10. Preferably, the coupling ball 11 is simultaneously locked in the coupling socket 27.

## Claims

1. A coupling hook (10) for a tractor hitch device, the coupling hook (10) including a coupling socket (27), a housing (25) and a catch (2), wherein the coupling hook (10) is configured to join a coupling ball (11) of an implement or analogous piece of equipment to its coupling socket (27) and to close the coupling socket (27) with the catch (2), which extends from the housing (25) into the coupling socket (27), **characterized in that** the coupling hook (10) includes an actuator (40) that is configured to press the coupling ball (11) against a counterface (50) of the coupling socket (27), thus eliminating any play (44) between the coupling ball (11) and the coupling hook (10).

2. A coupling hook (10) according to claim 1, **characterized in that** the actuator (40) is configured to lock the coupling ball (11) in the coupling socket (27), thus preventing an opening of the coupling hook (10).

3. A coupling hook (10) according to claim 1 or 2, **characterized in that** the actuator (40) is configured to be movable in such a manner that a path of movement of the actuator (40) is oriented towards the counterface (50) of the coupling socket (27).

4. A coupling hook (10) according to any of claims 1 to 3, **characterized in that** the actuator (40) is a self-locking adjustment actuator.

5. A coupling hook (10) according to any of claims 1 to 4, **characterized in that** the actuator (40) is a manually adjustable adjustment actuator.

6. A coupling hook (10) according to any of claims 1 to 5, **characterized in that** the actuator (40) is configured to press the catch (2) against the coupling ball (11) in such a manner that the catch (2) presses the coupling ball (11) against the counterface (50) of the coupling socket (27).

7. A coupling hook (10) according to any of claims 1 to 6, **characterized in that** the actuator (40) is configured to press the catch (2) by its upper face (14) towards the coupling socket (27).

8. A coupling hook (10) according to any of claims 1 to 7, **characterized in that** said actuator (40) is configured to push a locking face (20) of the catch (2) against the coupling ball (11).

9. A coupling hook (10) according to any of claims 1 to 8, **characterized in that** the actuator (40) includes a screw arranged in a threaded hole (43), which is arranged in the frame (1) of the coupling hook (10).

10. A coupling hook (10) according to claim 9, **characterized in that** said screw is a set screw (41).

11. A coupling hook (10) according to claim 10, **characterized in that** a locking screw (42) is arranged in the threaded hole (43) to lock the set screw (41) in place.

12. A coupling hook (10) according to any of claims 1 to 11, **characterized in that** the coupling hook (10) includes a spring (8) configured to pull the catch (2) towards the closed position and an operating lever (3) with a handle (18) that extends outside the housing (25).

13. An arm of a tractor hitch device, wherein said arm includes a coupling hook (10) according to any of claims 1 to 13.

14. An arm according to claim 13, **characterized in that** the arm is a towing arm (110).

15. A method for a coupling hook (10) for a tractor hitch device, in which method a coupling ball (11) of an implement or analogous piece of equipment is placed in a coupling socket (27) of the coupling hook (10) and the coupling socket (27) is closed with a catch (2), **characterized in that**, after the coupling socket (27) has been closed, the coupling ball (11) is pressed against a counterface (50) of the coupling socket (27) by means of an actuator (40), which eliminates play between the coupling ball (11) and the coupling hook (10).
